(19) Europäisches Patentamt

European Patent Office

Office européen des brevets

(11) **EP 4 769 497 A1**

(12) **EUROPEAN PATENT APPLICATION**

(43) Date of publication:
**01.07.2026 Bulletin 2026/27**

(21) Application number: **25226668.9**

(22) Date of filing: **23.12.2025**

(51) International Patent Classification (IPC):
*H01M 4/04* [(2006.01)]  *H01M 10/04* [(2006.01)]
*H01M 10/0562* [(2010.01)]  *H01M 10/0585* [(2010.01)]

(52) Cooperative Patent Classification (CPC):
**H01M 4/0435; H01M 10/0468; H01M 10/0562;**
**H01M 10/0585;** H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **27.12.2024 JP 2024233009**

(71) Applicant: **TOYOTA JIDOSHA KABUSHIKI**
**KAISHA**
**Toyota-shi, Aichi-ken, 471-8571 (JP)**

(72) Inventors:
• **SATO, Yuki**
**Toyota-shi,, 471-8571 (JP)**

• **TOKIOKA, Hideyuki**
**Toyota-shi,, 471-8571 (JP)**
• **KAKISHITA, Kenichi**
**Toyota-shi,, 471-8571 (JP)**
• **KIMURA, Takuya**
**Toyota-shi,, 471-8571 (JP)**
• **WASEDA, Tetsuya**
**Toyota-shi,, 471-8571 (JP)**
• **MATSUYAMA, Takuya**
**Toyota-shi,, 471-8571 (JP)**

(74) Representative: **Winter, Brandl - Partnerschaft**
**mbB**
**Alois-Steinecker-Straße 22**
**85354 Freising (DE)**

(54) **SOLID-STATE BATTERY AND METHOD OF MANUFACTURING SOLID-STATE BATTERY**

(57) A solid-state battery, and a method of manufacturing a solid-state battery, including a structure in which a first collector, a first electrode layer, a solid electrolyte layer, a second electrode layer and a second collector are disposed in this order in a first axial direction, the solid-state battery having a void at at least one of an interior of the first electrode layer and a periphery of the first electrode layer, wherein a shape of the void, as seen in a cross-sectional view along the first axial direction, is elongate in an in-plane direction of the first electrode layer.

FIG. 1

EP 4 769 497 A1

**Description**

BACKGROUND

Technical Field

The present disclosure relates to a solid-state battery and a method of manufacturing a solid-state battery.

Related Art

The demand for secondary batteries has been increasing recently, and, in addition to secondary batteries that use an electrolyte liquid, the development of solid-state batteries that use a solid electrolyte has advanced. An all-solid-state battery that is an example of a solid-state battery is a battery having a solid electrolyte layer instead of an electrolyte liquid. Because all-solid-state batteries do not use flammable organic solvents, simplification of the safety devices is devised, and such batteries have excellent manufacturing cost and mass producibility.

There is known an all-solid-state battery in which an all solid-state battery stack is covered by a resin layer, wherein, due to void portions existing between the resin layer and the side surfaces of negative electrode active material layers, cracks in the resin layer due to changes in volume of the all-solid-state battery stack can be suppressed (Japanese Patent Application Laid-Open (JP-A) No. 2019-121532).

SUMMARY

There are cases in which the electrode active materials contained in the electrode layers of a solid-state battery expand due to charging/discharging, and cracks form in the electrode layers themselves, and the battery performance deteriorates.

A topic that an embodiment of the present disclosure addresses is the provision of a solid-state battery that accommodates expansion of electrode layers that is due to charging/discharging. Further, a topic that an embodiment of the present disclosure addresses is the provision of a method of manufacturing a solid-state battery that accommodates expansion of electrode layers that is due to charging/discharging.

Means for addressing these topics include the following aspects.

A first aspect of the present disclosure provides a solid-state battery, comprising: a structure in which a first collector, a first electrode layer, a solid electrolyte layer, a second electrode layer and a second collector are disposed in this order in a first axial direction; and a void at at least one of an interior of the first electrode layer and a periphery of the first electrode layer, wherein a shape of the void, as seen in a cross-sectional view along the first axial direction, is elongate in an in-plane direction of the first electrode layer.

A second aspect of the present disclosure provides the solid-state battery of the first aspect, wherein a length of a short axis of the shape of the void, as seen in the cross-sectional view along the first axial direction, is 1 $\mu$m or less.

A third aspect of the present disclosure provides the solid-state battery of the first aspect or the second aspect, wherein an aspect ratio of the shape of the void, as seen in a cross-sectional view along the first axial direction, is from 10 to 40.

A fourth aspect of the present disclosure provides the solid-state battery of any one of the first to third aspects, wherein the void is formed at at least one of the interior of the first electrode layer or between the first electrode layer and the solid electrolyte layer.

A fifth aspect of the present disclosure provides the solid-state battery of any one of the first to fourth aspects, wherein, as seen in the cross-sectional view along the first axial direction, one or more voids are formed, and the one or more voids occupy a surface area of from 1% to 10% of an entire surface area of the first electrode layer.

A sixth aspect of the present disclosure provides the solid-state battery of any one of the first to fifth aspects, wherein the first electrode layer includes plural divisional layers, and the solid-state battery has a void at at least one of the periphery of the first electrode layer or between the plural divisional layers.

A seventh aspect of the present disclosure provides a method of manufacturing a solid-state battery that includes a structure in which a first collector, a first electrode layer, a solid electrolyte layer, a second electrode layer and a second collector are disposed in this order in a first axial direction, the method including: a step of obtaining a second layered body that includes the second electrode layer and the solid electrolyte layer by transferring a solid electrolyte layer transfer material provided with the solid electrolyte layer onto a surface of the second electrode layer of a first layered body that has the second collector and the second electrode layer and applying linear pressure P1 in the first axial direction; a step of obtaining a third layered body that further includes the first electrode layer by transferring a first electrode layer transfer material provided with the first electrode layer onto a surface of the solid electrolyte layer of the second layered body and applying a linear pressure P2 in the first axial direction; and a step of placing the first collector on a surface of the first electrode layer of the third layered body, wherein: the linear pressure P1 is greater than 0.25 t/cm, the linear pressure P2 is less than 4.0 t/cm, and the linear pressure P1 is less than the linear pressure P2.

An eighth aspect of the present disclosure provides a method of manufacturing a solid-state battery that includes a structure in which a first collector, a first electrode layer divisional layer B, a first electrode layer divisional layer A, a solid electrolyte layer, a second electrode layer and a second collector are disposed in this order in a first axial direction, the method comprising: a step of obtaining a second layered body that includes the second electrode layer and the solid electrolyte layer by transferring a solid electrolyte layer transfer material provided with the solid electrolyte layer onto a surface of the second electrode layer of a first layered body that has the second collector and the second electrode layer; a step of obtaining a third layered body A that further includes the first electrode layer divisional layer A by transferring a first electrode layer divisional layer A transfer material provided with the first electrode layer divisional layer A onto a surface of the solid electrolyte layer of the second layered body and applying a linear pressure P3 in the first axial direction; a step of obtaining a third layered body B that further includes the first electrode layer divisional layer B by transferring a first electrode layer divisional layer B transfer material provided with the first electrode layer divisional layer B onto a surface of the first electrode layer divisional layer A of the third layered body A and applying a linear pressure P4 in the first axial direction; and a step of placing the first collector on a surface of the first electrode layer divisional layer B of the third layered body B, wherein: the linear pressure P3 is greater than 0.25 t/cm, the linear pressure P4 is less than 3.0 t/cm, and the linear pressure P3 is less than the linear pressure P4.

In accordance with an embodiment of the present disclosure, there is provided a solid-state battery that accommodates expansion of electrode layers that is due to charging/discharging. Further, in accordance with an embodiment of the present disclosure, there is provided a method of manufacturing a solid-state battery that accommodates expansion of electrode layers that is due to charging/discharging.

BRIEF DESCRIPTION OF THE DRAWINGS

Fig. 1 is an image drawing schematically illustrating an SEM photograph of a cross-section in which a solid-state battery is cut along a first axial direction that is a layering direction of an electrode layer structure;

Fig. 2 is a schematic plan view illustrating an example of a position of cutting, along a plane parallel to the first axial direction, the surface of the solid-state battery that is seen in a plan view viewed from the upper surface thereof;

Fig. 3 is an image drawing schematically illustrating a portion of an SEM photograph of a cross-section in which the solid-state battery is cut along the first axial direction that is the layering direction of the electrode layer structure;

Fig. 4 is an explanatory drawing schematically illustrating a portion of an SEM photograph of a cross-section in which the solid-state battery is cut along the first axial direction that is the layering direction of the electrode layer structure, and is for explaining short axis a and long axis b;

Fig. 5 is an image drawing schematically illustrating a portion of an SEM photograph of a cross-section in which a solid-state battery, in which a first electrode layer is two layers, is cut along the first axial direction that is the layering direction of the electrode layer structure;

Fig. 6 is an explanatory drawing for explaining a method of manufacturing the solid-state battery; and

Fig. 7 is an explanatory drawing for explaining a method of manufacturing the solid-state battery in which the first electrode layer is two layers.

DETAILED DESCRIPTION

Embodiments of the present disclosure are described in detail hereinafter with reference to the appended drawings. However, the technical scope of the present disclosure is not limited to these examples.

In the present disclosure, numerical value ranges expressed by using "-" mean ranges in which the numerical values listed before and after the "-" are included as the minimum value and maximum value, respectively.

In numerical value ranges that are expressed in a stepwise manner in the present disclosure, the upper limit value or the lower limit value listed in a given numerical value range may be substituted by the upper limit value or the lower limit value of another numerical value range that is expressed in a stepwise manner. In the numerical value ranges put forth in the present disclosure, the upper limit value or the lower limit value listed in a given numerical value range may be substituted by a value set forth in the Examples.

In the present disclosure, "step" is not only an independent step and includes steps that, even in a case in which that step cannot be clearly distinguished from another step, achieve the intended object of that step.

In the present disclosure, combinations of two or more preferable aspects are more preferable aspects.

In the present disclosure, in a case in which there are plural types of materials that correspond to a component, the amount of that component means the total amount of the plural types of materials, unless otherwise specified.

In the present disclosure, when embodiments are described with reference to the drawings, the structure of the embodiment is not limited to the structure illustrated in the drawings. Further, the sizes of members in the respective drawings are schematic, and the relative relationships of the sizes of the members are not limited to these. Moreover, in order to avoid complication of the drawings, there are cases in which reference numerals are applied to only some of plural members or the like that are substantially the same. In the drawings, reference numerals that are the same or similar indicate elements that are the same or similar. In the present disclosure, semi-solid-state batteries and all-solid-state batteries are included as the "solid-state battery".

<Solid-State Battery>

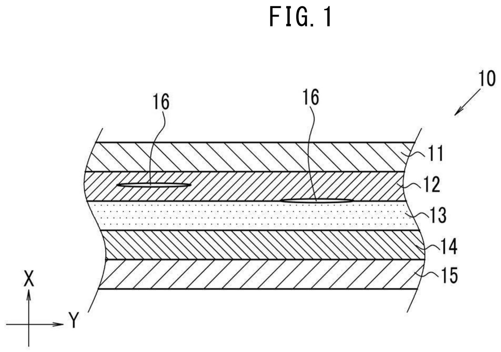

A solid-state battery that is an embodiment of the present disclosure is described hereinafter by using Fig. 1 through Fig. 5.

A solid-state battery that is an embodiment of the present disclosure (hereinafter also called solid-state battery) comprises a structure (hereinafter also called electrode layer structure) in which a first collector, a first electrode layer, a solid electrolyte layer, a second electrode layer and a second collector are disposed in this order in a first axial direction (i.e., the battery layering direction). A void is formed in the solid-state battery at at least one of (i) the interior of the first electrode layer or (ii) the periphery of the first electrode layer. The shape of the void as seen in a cross-sectional view along the first axial direction is elongate along the in-plane direction of the first electrode layer.

The periphery of the electrode layer means the entire surfaces of the electrode layer, and includes both an exposed surface thereof and a non-exposed surface thereof that contacts an adjacent layer.

A void means a closed space. Voids that are formed at the interior of the first electrode layer are spaces that are closed by the first electrode layer. Voids that are formed at the periphery of the first electrode layer are spaces that are closed by the first electrode layer and one or plural members of the solid-state battery that exist adjacent to the first electrode layer.

It is known that, in a solid-state battery, there are cases in which expansion/contraction during charging/discharging occurs at the negative electrode active material that the negative electrode layer contains. There are cases in which, due to the expansion/contraction of the negative electrode active material, the negative electrode layer expands/contracts, and cracks form in the negative electrode layer itself, and the battery performance deteriorates. For example, an Si-based active material is an active material of a high volume, and on the other hand, the expansion amount thereof tends to be large. Provided that expansion of the negative electrode layer due to charging/discharging can be accommodated and cracks in the negative electrode layer can be suppressed, use of, in particular, a negative electrode active material whose expansion amount is large, such as an Si-based active material, in this way is preferable because there is the possibility of such a negative electrode active material contributing greatly to suppressing a deterioration in battery performance.

The present inventors studied accommodating the expansion of an electrode layer, in order to suppress the generation of cracks due to expansion/contraction of the electrode layer during charging/discharging at a solid-state battery. They discovered that, by forming a void of a specific shape at at least one of the interior of the electrode layer or the periphery of the electrode layer, expansion of the electrode layer is accommodated by the void without deteriorating the battery performance and even if there is expansion/contraction of the electrode layer.

Although the mechanism by which expansion of the electrode layer is suppressed is unclear, it is assumed that, by forming a void of a specific shape at a specific place, there is no deterioration in the battery performance due to the formed void, and the effect of appropriately accommodating expansion of the electrode layer is exhibited suitably.

In the solid-state battery, the first collector may be a negative electrode collector or may be a positive electrode collector. In the solid-state battery, the first electrode layer may be a negative electrode layer or may be a positive electrode layer. From the standpoint of accommodating expansion of the electrode layer, it is preferable that the first collector be a negative electrode collector and that the first electrode layer be a negative electrode layer.

In the solid-state battery, if the first collector is a negative electrode collector, the second collector is a positive electrode collector. If the first collector is a positive electrode collector, the second collector is a negative electrode collector. In the solid-state battery, if the first electrode layer is a negative electrode layer, the second electrode layer is a positive electrode layer. If the first electrode layer is a positive electrode layer, the second electrode layer is a negative electrode layer. From the standpoint of accommodating expansion of the electrode layers, it is preferable that the first collector be a negative electrode collector, the first electrode layer be a negative electrode layer, the second collector be a positive electrode collector, and the second electrode layer be a positive electrode layer.

As illustrated in Fig. 1, for example, a solid-state battery 10 has a battery layer structure in which a first collector 11, a first electrode layer 12, a solid electrolyte layer 13, a second electrode layer 14 and a second collector 15 are disposed in this order in a first axial direction X.

The solid-state battery may independently have a plurality of each of the layers that structure of the battery layer structure. For example, the first electrode layer 12 may have plural divisional layers. Further, the solid-state battery may have the second electrode layer 14 on each of the two surfaces of the second collector 15, so as to have an electrode layer structure in which the first collector 11, the first electrode layer 12, the solid electrolyte layer 13, the second electrode layer 14, the second collector 15, the second electrode layer 14, the solid electrolyte layer 13, the first electrode layer 12 and the first collector 11 are disposed in this order in the first axial direction X.

In the solid-state battery, there are cases in which the first collector and the second collector are called "collectors" without discriminating therebetween. There are cases in which the first electrode layer and the second electrode layer are called "electrode layers" without discriminating therebetween. There are cases in which a first electrode layer divisional layer A and a first electrode layer divisional layer B are called "first electrode layers" without discriminating therebetween.

(Void)

In the solid-state battery, the void is formed at one or more locations selected from the group consisting of (i) an interior region of the first electrode layer and (ii) a peripheral region of the first electrode layer. The shape of the void as seen in a cross-sectional view along the first axial direction is long in the in-plane direction of the first electrode layer. The in-plane direction includes directions parallel to the direction in the plane of the first electrode layer. Due to the void being formed at at least one of the interior of the first electrode layer and the periphery of the first electrode layer, and the shape of the void as seen in a cross-sectional view along the first axial direction being long in the in-plane direction of the first electrode layer, expansion of the electrode layer is accommodated by the void, and the formation of cracks in the electrode layer is suppressed, without the battery performance being deteriorated and even if there is expansion/contraction of the electrode layer. There is the possibility that cracks that form in the electrode layer will bring about an increase in the internal resistance by impeding ion movement at the battery interior.

The void may be formed only in the interior of the first electrode layer, or may be formed only at the periphery of the first electrode layer, or may be formed at both the interior of the first electrode layer and the periphery of the first electrode layer. Further, it suffices for one or more of the voids to be formed, and plural voids may be formed.

In a case in which a void is formed at the periphery of the first electrode layer, it is preferable that the void be formed at the main surface of the first electrode layer. Concrete examples of the periphery of the first electrode layer 12 are at least one of between the first electrode layer 12 and the first collector 11, and between the first electrode layer 12 and the solid electrolyte layer 13 (see Fig. 1). As illustrated in Fig. 1, in the solid-state battery 10, a void 16 is formed at at least one of the interior of the first electrode layer 12 and the periphery of the first electrode layer 12.

The shape of the void, as seen in a cross-sectional view taken along the first axial direction, is an elongated shape whose major axis extends in an in-plane direction of the first electrode layer.

The first axial direction X (see Fig. 1) is the layering direction of the battery layer structure. Accordingly, a cross-sectional view along the first axial direction X means a case of viewing a cross-section in which the solid-state battery has been cut along the layering direction of the battery layer structure. Specifically, the cross-sectional view along the first axial direction X can be an SEM (Scanning Electron Microscope) image of a cross-section obtained by cutting the solid-state battery in the layering direction of the battery layer structure. It suffices for the way of cutting the solid-state battery to be such that a cross-section of the first electrode layer is included, and the position of cutting is not limited. For example, it is preferable that the cross-section that is seen in a cross-sectional view along the first axial direction be a cross-section that includes a vicinity of the center of the solid-state battery. Specifically, if the solid-state battery is a prismatic battery, it is preferable that the cross-sectional view is a cross-sectional view in a case in which the rectangle is cut into two approximately equal parts lengthwise or widthwise.

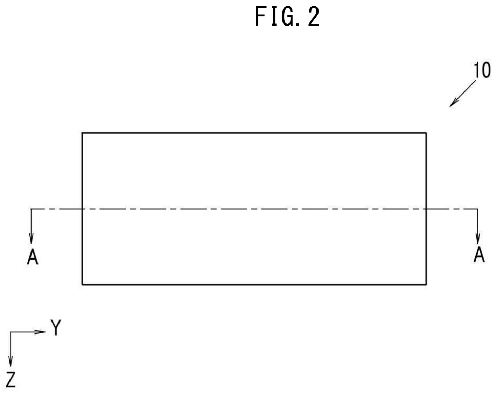

In a case in which the solid-state battery 10 is a prismatic battery, as illustrated in Fig. 2, the cross-sectional view along the first axial direction X can be the cross-sectional view of the cross-section cut along line A-A that divides the short-side direction of the rectangle, in a plan view viewed from the upper surface, into two approximately equal parts. Note that, in Fig. 2, the layering direction of the battery layer structure of the solid-state battery 10 is the first axial direction X (the direction orthogonal to the rectangular surface in the plan view seen from the upper surface in Fig. 2).

The shape of the void as seen in a cross-sectional view along the first axial direction is a shape that is elongate in the in-plane direction of the first electrode layer. The void is a slender shape, and extends along the in-plane direction of the first electrode layer. The void has its long axis in the in-plane direction of the first electrode layer, and has its short axis direction in a direction orthogonal to the in-plane direction of the first electrode layer, i.e., in the first axial direction. The in-plane direction of the first electrode layer means the direction of the plane of the first electrode layer and directions parallel thereto. In a case in which there are protrusions and recesses at the surface of the first electrode layer, the direction of the plane of the first electrode layer may be the direction of a virtual plane. For example, the arithmetic mean position in the depth direction of the protrusions and recesses of the surface of the first electrode layer may be used as the plane of the first electrode layer.

Note that the voids are voids that are formed as gaps at the time when the battery layer structure is formed by stacking the respective layers such as the collectors and the electrode layers. Therefore, voids that have the same shape are not formed. The directions of the long axes of the voids do not have to be strictly parallel to the in-plane direction of the first electrode layer, and may be at an angle (angles within the range of -5° - 5°) that is considered to be parallel to the in-plane direction at a glance. The same holds for the directions of the short axes. The short axes do not have to be strictly parallel to the first axial direction, and may be at an angle (angles within the range of -5°- 5°) that is considered to be parallel to the first axial direction at a glance.

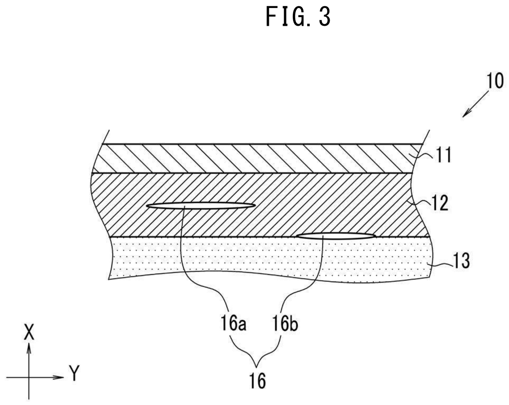

As illustrated in Fig. 3, at the solid-state battery 10, void 16a is formed in the interior of the first electrode layer 12, and void 16b is formed at the periphery of the first electrode layer 12. The shapes, seen in a cross-sectional view along the first axial direction X, of the voids 16 that include the void 16a and the void 16b are long along in-plane direction Y of the first electrode layer 12.

In a case in which a void is formed at the periphery of the first electrode layer 12, the void may be formed in the first collector 11 or the solid electrolyte layer 13 that is adjacent, at a position at which the void 16 enters. Namely, voids at the periphery of the first electrode layer 12 may be formed by recesses and protrusions that exist at the interface with the adjacent first collector 11 or at the interface with the solid electrolyte layer 13.

From the standpoints of not deteriorating the battery performance and accommodating expansion of the electrode layer, the length of the short axis of the shape of the void as seen in a cross-sectional view along the first axial direction is preferably 1 $\mu$m or less, and is more preferably 0.2 $\mu$m - 0.5 $\mu$m.

From the standpoints of avoiding deterioration in battery performance and accommodating expansion of the electrode layer, it is preferable that the aspect ratio of the void, measured in a cross-sectional view taken along the first axial direction, be in the range of 10 to 40, inclusive.

The aspect ratio means the length of the long axis in a case in which the short axis is considered to be 1. Accordingly, in a case in which the length of the short axis of the void is considered to be 1, the length of the long axis is preferably from 10 to 40, and more preferably from 15 to 30.

The shape, as seen in a cross-sectional view along the first axial direction, of the void is preferably the shape of a slit or the shape of a slender strap.

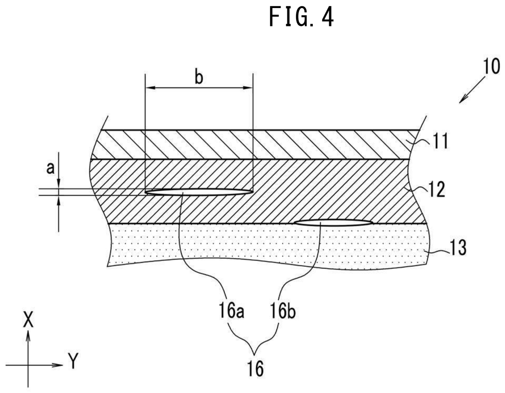

As illustrated in Fig. 4, at the solid-state battery 10, the void 16a has short axis a and long axis b. The length of the long axis b is longer than the length of the short axis a.

From the standpoints of not deteriorating the battery performance and accommodating expansion of the electrode layer, the void that is formed at the periphery of the first electrode layer is preferably formed between the first electrode layer and the solid electrolyte layer. The void 16b (see Fig. 3 or Fig. 4) is formed between the first electrode layer and the solid electrolyte layer.

From the standpoints of avoiding deterioration in battery performance and accommodating expansion of the electrode layer, one or more voids may be present in a cross-sectional view taken along the first axial direction.

From the standpoints of not deteriorating the battery performance and accommodating expansion of the electrode layer, it is preferable that the amount that the void occupies, of the entire surface area of the first electrode layer as seen in a cross-sectional view along the first axial direction, is a surface area of 1% - 10% and more preferably a surface area of 2% - 5%.

From the standpoints of not deteriorating the battery performance and accommodating expansion of the electrode layer, the shape of the void as seen in a cross-sectional view along the first axial direction is preferably formed to be a proportion of 10% - 60%, and more preferably formed to be a proportion of 20% - 40%, based on the surface area of a strip-shaped region that has a width of 400 $\mu$m in the Y direction and that is set along a straight line substantially parallel to in-plane direction Y of the first electrode layer 12. If plural voids are formed, the voids may be offset toward the first electrode layer, or may exist uniformly.

The first electrode layer may include plural divisional layers. The number of divisional layers may be two or may be three or more. Provided that the plural divisional layers function as the first electrode layer, the plural divisional layers may respectively be the same type of layer, or may be layers of types that differ from one another. The type of the layer includes the composition, shape, dimensions and the like. In a case in which the first electrode layer includes plural divisional layers, it is preferable that the void be formed at at least one of the periphery of the first electrode layer and between the plural divisional layers. The void is a void that is formed as a gap at the time when the battery layer structure is formed by using structural elements of the battery such as collectors and electrode layers. Therefore, at the time of forming the battery layer structure from plural divisional layers respectively, the void is formed between the plural divisional layers. A void that is formed at the interior of the first electrode layer may be a void that is formed between the plural divisional layers.

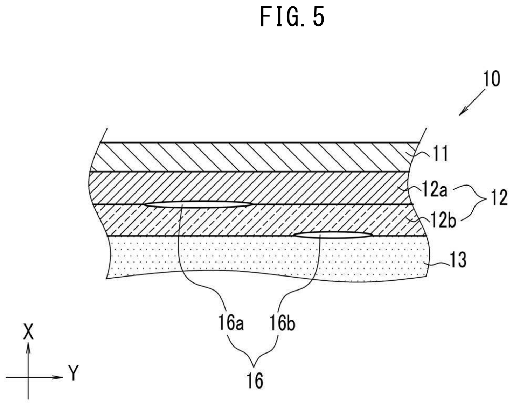

As illustrated in Fig. 5, the first electrode layer 12 has divisional layer 12a and divisional layer 12b. The void 16a is formed at the interface between the divisional layer 12a and the divisional layer 12b.

<Elements of Solid-State Battery>

(Collectors)

The respective elements that structure the electrode layer structure that the solid-state battery contains are described.

The types of collectors that the solid-state battery contains can be selected from known collectors.

Specific examples of materials of the collectors are metals selected from Ag, Cu, Au, Al, Ni, Fe and Ti, and alloys containing these metals.

Examples of the positive electrode collector are stainless steel, Al, Ni, Fe, Ti and carbon, and an aluminum alloy foil or an aluminum foil is preferable.

The negative electrode collector may be made of metal or made of resin or the like. Examples of negative electrode collectors that are made of metal are aluminum foil, nickel foil, titanium foil and copper foil. Collectors that are known as resin collectors can be used as the negative electrode collector that is made of resin, and an electrically-conductive resin collector that is a composite material containing a resin, such as polyethylene or a phenol resin, and an electrically-conductive filler such as graphite, can be used.

The aluminum alloy foil and aluminum foil may be manufactured by using a powder. Examples of the form of the positive electrode collector and the negative electrode collector are the form of a foil and the form of a mesh.

The thickness of the collectors is not particularly limited, and can be selected in consideration of the type, the scale and the like of the battery that uses the collectors.

The collector may contain plural layers.

The total thickness of the collector may be, for example, 5 $\mu$m or more, 10 $\mu$m or more, or 20 $\mu$m or more.

The total thickness of the collector may be, for example, 120 $\mu$m or less, 80 $\mu$m or less, or 60 $\mu$m or less.


(Electrode Layers)

The types of the electrode layers contained in the solid-state battery are not particularly limited, and can be selected from known electrode layers.

The electrode layer contains at least an electrode active material, and, as needed, may contain a binder, a conductive material, a solid electrolyte, and the like.

In a case in which the solid electrolyte layer contains a solid electrolyte, a solid electrolyte may be contained in at least one of the first electrode layer and the second electrode layer that are disposed at the both sides of the solid electrolyte layer. In the present disclosure, the electrode active material contained in the first electrode layer is also called the first electrode active material, and the electrode active material contained in the second electrode layer is also called the second electrode active material.

When the first electrode layer is a negative electrode layer, the first electrode active material is a negative electrode active material. When the first electrode layer is a positive electrode layer, the first electrode active material is a positive electrode active material.

When the second electrode layer is a negative electrode layer, the second electrode active material is a negative electrode active material. When the second electrode layer is a positive electrode layer, the second electrode active material is a positive electrode active material.

Specific examples of negative electrode active materials are carbon materials, active materials containing the element Si, metallic lithium, lithium-containing alloys, and metals or alloys, oxides and transition metal nitrides that can form alloys with lithium.

Examples of carbon materials are graphite materials, amorphous carbon materials, carbon black, and activated carbon. Examples of graphite materials are natural graphite and artificial graphite. Examples of amorphous carbon materials are hard carbon, soft carbon, coke, mesocarbon microbeads (MCMB), and mesophase pitch carbon fibers (MCF). The graphite materials may be covered by a metal or amorphous carbon.

Examples of active materials containing the element Si are elemental silicon, silicon alloys (e.g., alloys of Si and one or more metals selected from the group consisting of Sn, Ti, Fe, Ni, Cu, Co and Al), porous silicon, silicon clathrate compounds, and silicon oxides.

Specific examples of positive electrode active materials are composite oxides containing lithium and a transition metal (hereinafter also called composite oxides). Examples of composite oxides are composite oxides having a layered-type crystal structure, composite oxides having a spinel-type crystal structure, and composite oxides having an olivine-type crystal structure.

Specific examples of composite oxides having a layered-type crystal structure are compounds expressed by $LiMO_2$ (where M is at least one type of transition metal selected from the group consisting of Ni, Co and Mn), and compounds formed by adding a different type of element to such compounds. Representative examples of composite oxides having a layered-type crystal structure are LCO (lithium cobalt oxide), NCM (lithium nickel cobalt manganese oxide), and NCA (lithium nickel oxide or lithium nickel cobalt aluminum oxide).

Specific examples of composite oxides having a spinel-type crystal structure are $LiMn_2O_4$. Specific examples of composite oxides having an olivine-type crystal structure are $LiMPO_4$ (M is Fe, Co, Ni or Mn).

The electrode active material contained in the electrode layer may be a single type only, or may be a combination of two or more types.

The form of the electrode active material may be, for example, fiber-shaped, spherical, flakeshaped or the like.

The volume average particle diameter of the electrode active material may be selected from the range of 5 $\mu$m - 50 $\mu$m for example. The volume average particle diameter of the electrode active material is the value (D50) at which the accumulation from the small diameter side is 50% in a volume-based particle size distribution obtained by using a laser diffraction/scattering method.

Specific examples of the binder are polyvinylidene fluoride (PVdF), polyethylene, polypropylene, polyethylene terephthalate, cellulose, nitrocellulose, carboxymethyl cellulose, polyethylene oxide, polyepichlorohydrin, polyacrylonitrile, styrene-butadiene rubber (SBR), acrylonitrile-butadiene rubber (NBR), polyacrylate, polymethacrylate, and polytetrafluoroethylene (PTFE).

Examples of the conductive material are carbon materials, metals, electrically-conductive oxides, and electrically-conductive nitrides.

Specific examples of carbon materials are graphite, carbon black (acetylene black, thermal black, furnace black), carbon nanotubes (CNT), carbon nanofibers (CNF), and vapor grown carbon fibers (VGCF™).

The conductive material may be a single type only, or two or more types may be used together.

Examples of the solid electrolyte are sulfide solid electrolytes, oxide solid electrolytes and polymer solid electrolytes.

From the standpoint of the battery performance, sulfide solid electrolytes and polymer solid electrolytes are preferable as the solid electrolyte, and from the standpoint of thermal stability, sulfide solid electrolytes are more preferable.

The solid electrolyte may be a single type only, or two or more types may be used together.

Examples of sulfide solid electrolytes are compounds containing a metal element that becomes the ions that are conducted, and sulfur (S).

Examples of the metal element are Li, Na, K, Mg and Ca. Thereamong, Li is preferable as the metal element.

The sulfide solid electrolyte may contain Li and S, and at least one selected from the group consisting of P, Si, Ge, Al and B. Thereamong, a sulfide solid electrolyte that contains Li, S and P (hereinafter also called LPS-type sulfide solid electrolyte) is preferable.

From the standpoint of ion conductivity, the sulfide solid electrolyte may contain a halogen element such as Cl, Br, I. From the standpoint of chemical stability, the sulfide solid electrolyte may contain oxygen (O).

Specific examples of LPS-type sulfide solid electrolytes are $Li_2S-P_2S_5$, $Li_2S-P_2S_5-LiI$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $LiI-Li_2S-P_2O_5$, $LiI-Li_3PO_4-P_2S_5$, $LiBr-LiI-Li_2S-P_2S_5$, $Li_2S-P_2S_5-ZmSn$ (m and n in the formula are respectively positive numbers, and Z is Ge, Zn or Ga), $Li_2S-GeS_2$, $Li_2S-SiS_2-Li_3PO_4$, and $Li_2S-SiS_2-Li_xMO_y$ (x and y in the formula are respectively positive numbers, and M is P, Si, Ge, B, Al, Ga or In).

In the above description, the notation "$Li_2S-P_2S_5$" means a sulfide solid electrolyte obtained by using $Li_2S$ and $P_2S_5$ as the raw materials. The same holds for other notation.

Among LPS-type sulfide solid electrolytes, sulfide solid electrolytes obtained by using $Li_2S$ and $P_2S_5$ are preferable, and sulfide solid electrolytes satisfying the following formula are more preferable.

$$Li_{3+x+5y}P_{1-y}S_4$$

$(0<x\leq0.6, 0<y\leq0.2)$

Examples of oxide solid electrolytes are compounds having a NASICON ($Na_3Zr_2PSi_2O_{12}$) type crystal structure. Compounds having a NASICON-type crystal structure have high ion conductivity, and excellent stability in the atmosphere. Examples of compounds having NASICON-type crystal structures are phosphates that contain lithium. Examples of phosphates are composite lithium phosphate salts with Ti (e.g., $Li_{1+x}Al_xTi_{2-x}(PO_4)_3$), and compounds in which all of or some of the Ti in the aforementioned composite lithium phosphate salt is substituted with a tetravalent transition metal such as Ge, Sn, Hf, Zr or a trivalent transition metal such as Al, Ga, In, Y, La. Specific examples of compounds having a NASICON-type crystal structure are Li-Al-Ge-P-O based materials ($Li_{1+x}Al_xGe_{2-x}(PO_4)_3$), Li-Al-Zr-P-O based materials ($Li_{1+x}Al_xZr_{2-x}(PO_4)_3$), and Li-Al-Ti-P-O based materials ($Li_{1+x}Al_xTi_{2-x}(PO_4)_3$).

Examples of polymer solid electrolytes are mixtures (complexes) of polymer compounds and electrolyte salts. Specific examples of polymer compounds are polyether-based polymer compounds such as polyethylene oxide (PEO) and polypropylene oxide (PPO), polyamine-based polymer compounds such as polyethyleneimine (PEI), and polysulfide-based polymer compounds such as polyalkylene sulfide (PAS). Thereamong, polyether-based polymer compounds are preferable.

(Solid Electrolyte Layer)

Electrolyte layers that are used in semi-solid-state batteries and all-solid-state batteries are examples of the solid electrolyte layer used in the battery of the present disclosure.

The thickness of the solid electrolyte layer is not particularly limited, and can be selected from the range of 1 $\mu$m - 30 $\mu$m for

example.

The type of the solid electrolyte contained in the solid electrolyte layer is not particularly limited and, for example, may be selected from the above-described solid electrolytes that may be contained in the electrode layer.

In the solid electrolyte layer, the first electrode layer and the second electrode layer may respectively contain a solid electrolyte. In this case, the types of the solid electrolytes that are contained in the respective layers may be the same or may be different.

The electrode layer structure that contains the solid electrolyte layer has the first collector 11, the first electrode layer 12, an electrolyte layer that is the solid electrolyte layer 13, the second electrode layer 14 and the second collector 15 (see Fig. 1).

The first electrode layer 12 may contain a first electrode active material, a conductive material, a binder and a solid electrolyte. The second electrode layer 14 may contain a second electrode active material, a conductive material, a binder and a solid electrolyte.

The solid electrolyte layer may be a single layer, or may be a multilayer structure of two or more layers.

In a case in which the solid-state battery, which is an embodiment of the present disclosure, contains a solid electrolyte, the solid-state battery may contain, together with the solid electrolyte, an electrolyte liquid in an amount of less than 10 mass% with respect to the total amount of the electrolyte.

"Solid-state battery" in the present disclosure is a generic term for batteries in which the liquid electrolyte liquid is less than 10 mass% with respect to the entire amount of the electrolyte. Thereamong, solid-state batteries in which the liquid electrolyte liquid is 1 mass% or less are considered to be "all-solid-state batteries", and solid-state batteries in which the liquid electrolyte liquid is greater than 1 mass% and less than 10 mass% are considered to be "semi-solid-state batteries".

In a case in which the solid-state battery that is an embodiment of the present disclosure contains a solid electrolyte, the solid electrolyte may be a composite solid electrolyte containing an inorganic solid electrolyte and a polymer electrolyte.

If the solid-state battery that is an embodiment of the present disclosure contains an electrolyte liquid as an electrolyte, the type of the electrolyte liquid is not particularly limited, and a known electrolyte liquid can be used.

Specific examples of the electrolyte liquid are liquids in which a lithium salt such as $LiPF_6$ or LiFSI is dissolved in an organic solvent.

Specific examples of the organic solvent are cyclic or chain carbonates such as ethylene carbonate (EC), dimethyl carbonate (DMC), diethyl carbonate (DEC), and ethyl methyl carbonate (EMC). The solvent may be a mixture of two or more types of solvents, and may be a mixture containing a cyclic carbonate and a chain carbonate.

The solvent may contain additives such as vinylene carbonate (VC).

(Exterior Body)

The solid-state battery that is an embodiment of the present disclosure may further have an exterior body. The exterior body accommodates at least the above-described electrode stack therein. Examples of the exterior body are a laminate-type exterior body and a case-type exterior body. A laminate-type exterior body may be formed from a laminated body (a laminate film) that has a metal layer containing a metal such as aluminum and a heat sealing layer containing a resin that melts by being heated.

(Restraining Member)

The solid-state battery that is an embodiment of the present disclosure may further have a restraining member. The restraining member applies restraining pressure in the thickness direction to the above-described electrode stack. The restraining pressure that is applied in the thickness direction of the electrode stack may be, for example, 0.1 MPa or more, 1 MPa or more, or 5 MPa or more.

The restraining pressure that is applied in the thickness direction of the electrode stack may be, for example, 100 MPa or less, 50 MPa or less, or 20 MPa or less.

<Method of Manufacturing Solid-State Battery>

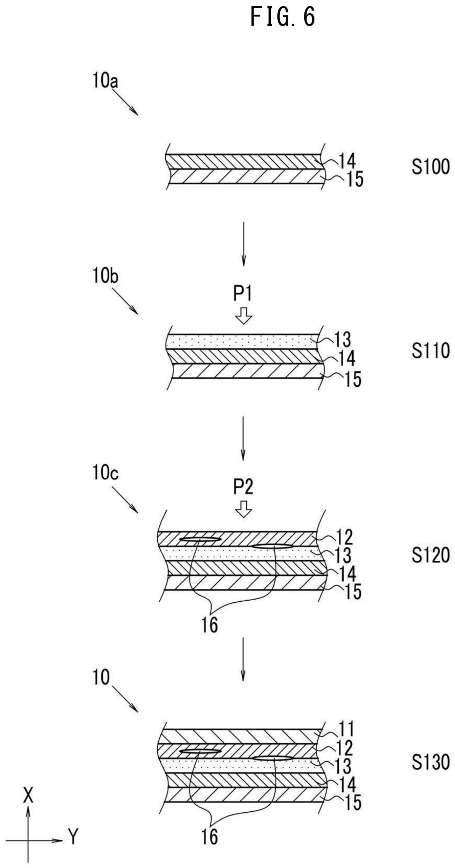

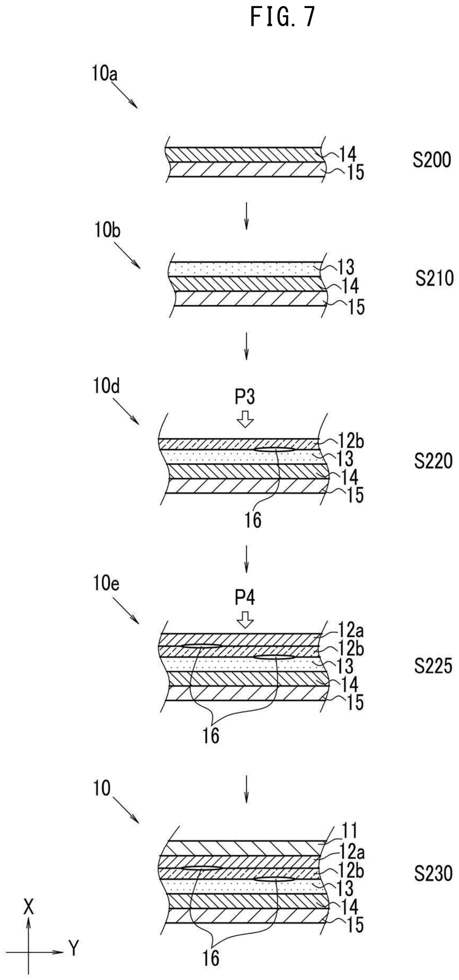

A method of manufacturing a solid-state battery that is an embodiment of the present disclosure is described hereinafter by using Fig. 6 and Fig. 7.

The method of manufacturing a solid-state battery that is an embodiment of the present disclosure is a method of manufacturing a solid-state battery that includes a structure in which a first collector, a first electrode layer, a solid electrolyte layer, a second electrode layer and a second collector are disposed in this order in a first axial direction, and the method includes a second layered body preparing step, a third layered body preparing step, and a first collector placing step.

The second layered body preparing step is a step of obtaining a second layered body that includes a second electrode layer and a solid electrolyte layer by transferring a solid electrolyte layer transfer material provided with the solid electrolyte layer onto the surface of the second electrode layer of a first layered body that has a second collector and the second electrode layer, and applying a linear pressure P1 in the first axial direction.

The third layered body preparing step is a step of obtaining a third layered body that further includes a first electrode layer by transferring a first electrode layer transfer material provided with the first electrode layer onto the surface of the solid electrolyte layer of the second layered body and applying a linear pressure P2 in the first axial direction.

The first collector placing step is a step of placing a first collector on the surface of the first electrode layer of the third layered body.

In the second layered body preparing step, the linear pressure P1 is greater than 0.25 t/cm, and in the third layered body preparing step, the linear pressure P2 is less than 4.0 t/cm, and the linear pressure P1 is less than the linear pressure P2. In the present disclosure, "t" in "t/cm" means ton-force, specified herein as metric ton-force (tf), and "linear pressure" (P1-P4) means force per unit length (load/width).

In the present disclosure, the linear pressure can be a value measured by following formula (1), as linear pressure applied by roll pressing.

$$\text{roll thrust} / (\text{width of workpiece} \times \text{crushing margin in flowing direction}) \quad \ldots \text{formula (1)}$$

The above-described solid-state battery, in which a void, whose shape in a cross-sectional view along the first axial direction is elongate in the in-plane direction of the first electrode layer, is formed at at least one of the interior of the first electrode layer and the periphery of the first electrode layer, can be manufactured well by the method of manufacturing a solid-state battery that is an embodiment of the present disclosure and that forms the respective layers of the battery layer structure of the solid-state battery by transfer at specific linear pressures respectively. From the standpoint of forming the voids well, it is preferable that the linear pressure be applied by a pressing treatment, and specifically, be applied by roll pressing. Densification of the respective layers also can be carried out by the pressing treatment.

(Second Layered Body Preparing Step)

In the second layered body preparing step, the solid electrolyte layer is transferred onto the surface of the second electrode layer of the first layered body, having the second collector and the second electrode layer, by using the solid electrolyte layer transfer material having the solid electrolyte layer. At the time of transferring the solid electrolyte layer, linear pressure P1 is applied in the first axial direction. Due thereto, the second layered body that has the second collector, the second electrode layer and the solid electrolyte layer in this order is obtained. The linear pressure P1 is preferably applied by roll pressing.

From the standpoint of forming the voids well at the periphery of the first electrode layer, and preferably between the first electrode layer and the solid electrolyte layer, the linear pressure P1 is greater than 0.25 t/cm, and is preferably 0.4 t/cm or more. Further, the linear pressure P1 is less than linear pressure P2 that is described later. Linear pressure P1 is less than 4.0 t/cm, and is preferably 1.5 t/cm or less.

Although it depends also on the materials of the respective layers that are pressed, the temperature in a case in which linear pressure P1 is applied by roll pressing is preferably adjusted in accordance with the linear pressure P1, from the standpoint of maintaining the respective layers well. Specifically, in a case in which linear pressure P1 is 0.4 t/cm - 1.5 t/cm, the temperature is preferably 40°C - 180°C.

(Third Layered Body Preparing Step)

In the third layered body preparing step, a first electrode layer transfer material provided with the first electrode layer is transferred onto the surface of the solid electrolyte layer of the second layered body. At the time of transferring the first electrode layer, linear pressure P2 is applied in the first axial direction. Due thereto, a third layered body that has the second collector, the second electrode layer, the solid electrolyte layer and the first electrode layer in this order is obtained. The linear pressure P2 is preferably applied by roll pressing.

From the standpoint of forming the voids well at the interior of the first electrode layer or at the periphery of the first electrode layer, the linear pressure P2 is less than 4.0 t/cm, and is preferably 3.0 t/cm or less. Further, linear pressure P2 is greater than linear pressure P1. Linear pressure P2 is greater than 0.25 t/cm, and is preferably 0.4 t/cm or more.

Although it depends also on the materials of the respective layers that are pressed, the temperature in a case in which linear pressure P2 is applied by roll pressing is preferably adjusted in accordance with the linear pressure P2, from the standpoint of maintaining the respective layers well. Specifically, in a case in which linear pressure P2 is 0.4 t/cm - 4.0 t/cm, the temperature is preferably 40°C - 180°C.

(First Collector Placing Step)

In the first collector placing step, the first collector is placed on the surface of the first electrode layer of the third layered body. Due thereto, a battery layer structure that has the second collector, the second electrode layer, the solid electrolyte layer, the first electrode layer and the first collector in this order is obtained.

As illustrated in Fig. 6, for example, the method of manufacturing a solid-state battery carries out, in this order, readying a first layered body 10a that has the second collector 15 and the second electrode layer 14 (step S100), the second layered body preparing step (step S110), the third layered body preparing step (step S120), and the first collector placing step (step S130).

In the second layered body preparing step (S110), a second layered body 10b that includes the second electrode layer 14 and the solid electrolyte layer 13 is obtained by transferring the solid electrolyte layer transfer material provided with the solid electrolyte layer 13 onto the surface of the second electrode layer 14 of the first layered body 10a, and by applying linear pressure P1 in the first axial direction.

In the third layered body preparing step (S120), a third layered body 10c that further includes the first electrode layer 12 is obtained by transferring a first electrode layer transfer material provided with the first electrode layer 12 onto the surface of the solid electrolyte layer 13 of the second layered body 10b, and by applying linear pressure P2 in the first axial direction. In the first collector placing step (S130), the first collector 11 is placed on the surface of the first electrode layer 12 of the third layered body 10c, and the solid-state battery 10 including the battery layer structure is obtained.

Each of the layers that structure the battery layer structure may be a single layer or may be plural layers that are two or more layers.

In the case of a layer that is layered by transfer, a transfer material provided with plural divisional layers in advance may be used, or a transfer material provided with one layer may be successively transferred plural times.

A method of manufacturing a solid-state battery that is an embodiment of the present disclosure is a method of manufacturing a solid-state battery that includes a structure in which a first collector, a first electrode layer divisional layer B, a first electrode layer divisional layer A, a solid electrolyte layer, a second electrode layer and a second collector are disposed in this order in the first axial direction, the method including a second layered body preparing step, a third layered body A preparing step, a third layered body B preparing step, and a first collector placing step.

The second layered body preparing step is a step of obtaining a second layered body that includes the second electrode layer and the solid electrolyte layer by transferring a solid electrolyte layer transfer material provided with the solid electrolyte layer onto the surface of the second electrode layer of a first layered body having the second collector and the second electrode layer. In the step of obtaining the second layered body, linear pressure P1 may be applied at the time of transferring the solid electrolyte layer.

The third layered body A preparing step is a step of preparing a third layered body A that further includes the first electrode layer divisional layer A by transferring a first electrode layer divisional layer A transfer material provided with the first electrode layer divisional layer A onto the surface of the solid electrolyte layer of the second layered body and applying a linear pressure P3 in the first axial direction.

The third layered body B preparing step is a step of preparing a third layered body B that further includes the first electrode layer divisional layer B by transferring a first electrode layer divisional layer B transfer material provided with the first electrode layer divisional layer B onto the surface of the first electrode layer divisional layer A of the third layered body A and applying a linear pressure P4 in the first axial direction.

The first collector placing step is a step of placing the first collector on the surface of the first electrode layer divisional layer B of the third layered body B.

In the third layered body A preparing step, linear pressure P3 is greater than 0.25 t/cm, and in the third layered body preparing step, linear pressure P4 is less than 3.0 t/cm, and linear pressure P3 is less than linear pressure P4.

The above-described solid-state battery, in which a void, whose shape in a cross-sectional view along the first axial direction is elongate in the in-plane direction of the first electrode layer, is formed at at least one of the interior of the first electrode layer and the periphery of the first electrode layer, can be manufactured well by the method of manufacturing a solid-state battery that is an embodiment of the present disclosure and that forms the respective layers of the battery layer structure of the solid-state battery by transfer at specific linear pressures respectively. From the standpoint of forming the voids well, it is preferable that the linear pressure be applied by roll pressing. Densification of the respective layers also can be carried out by the roll pressing.

(Second Layered Body Preparing Step)

In the second layered body preparing step, the solid electrolyte layer is transferred onto the surface of the second electrode layer of the first layered body, which has the second collector and the second electrode layer, by using the solid electrolyte layer transfer material provided with the solid electrolyte layer. At the time of transferring the solid electrolyte layer, linear pressure P1 is applied in the first axial direction. Due thereto, the second layered body that has the second collector, the second electrode layer and the solid electrolyte layer in this order is obtained.

(Third Layered Body A Preparing Step)

In the third layered body A preparing step, the first electrode layer divisional layer A transfer material provided with the first electrode layer divisional layer A is transferred onto the surface of the solid electrolyte layer of the second layered body. At the time of transferring the first electrode layer divisional layer A, linear pressure P3 is applied in the first axial direction. Due thereto, the third layered body A that has the second collector, the second electrode layer, the solid electrolyte layer and the first electrode layer divisional layer A in this order is obtained. The linear pressure P3 is preferably applied by roll pressing.

From the standpoint of forming the voids well at the periphery of the first electrode layer, and preferably between the first electrode layer and the solid electrolyte layer, linear pressure P3 is greater than 0.25 t/cm, and is preferably 0.4 t/cm or more. Further, linear pressure P3 is less than linear pressure P4 that is described later. Linear pressure P3 is less than 3.0 t/cm, and is preferably 2.0 t/cm or less.

Although it depends also on the materials of the respective layers that are pressed, the temperature in a case in which linear pressure P3 is applied by roll pressing is preferably adjusted in accordance with the linear pressure P3, from the standpoint of maintaining the respective layers well. Specifically, in a case in which linear pressure P3 is 0.4 t/cm - 2.0 t/cm, the temperature is preferably 40°C - 180°C.

(Third Layered Body B Preparing Step)

In the third layered body B preparing step, the first electrode layer divisional layer B transfer material provided with the first electrode layer divisional layer B is transferred onto the surface of the first electrode layer divisional layer A of the third layered body A. At the time of transferring the first electrode layer divisional layer B, linear pressure P4 is applied in the first axial direction. Due thereto, the third layered body B that has the second collector, the second electrode layer, the solid electrolyte layer, the first electrode layer divisional layer A and the first electrode layer divisional layer B in this order is obtained. The linear pressure P4 is preferably applied by roll pressing.

From the standpoint of forming the voids well at the interior of the first electrode layer or at the periphery of the first electrode layer, linear pressure P4 is less than 3.0 t/cm, and is preferably 2.5 t/cm or less. Further, linear pressure P4 is greater than linear pressure P3. Linear pressure P4 is greater than 0.25 t/cm, and is preferably 0.8 t/cm or more.

Although it depends also on the materials of the respective layers that are pressed, the temperature in a case in which linear pressure P4 is applied by roll pressing is preferably adjusted in accordance with the linear pressure P4, from the standpoint of maintaining the respective layers well. Specifically, in a case in which linear pressure P4 is 0.8 t/cm - 2.5 t/cm, the temperature is preferably 40°C - 180°C.

(First Collector Placing Step)

In the first collector placing step, the first collector is placed on the surface of the first electrode layer divisional layer B of the third layered body B. Due thereto, a battery layer structure that has the second collector, the second electrode layer, the solid electrolyte layer, the first electrode layer divisional layer A, the first electrode layer divisional layer B, and the first collector in this order is obtained.

As illustrated in Fig. 7, for example, the method of manufacturing a solid-state battery carries out, in this order, readying the first layered body 10a that has the second collector 15 and the second electrode layer 14 (step S200), the second layered body preparing step (step S210), the third layered body A preparing step (step S220), the third layered body B preparing step (step S225), and the first collector placing step (step S230).

In the second layered body preparing step (S210), the second layered body 10b that includes the second electrode layer 14 and the solid electrolyte layer 13 is obtained by transferring the solid electrolyte layer transfer material provided with the solid electrolyte layer 13 onto the surface of the second electrode layer 14 of the first layered body 10a, and applying linear pressure P1 in the first axial direction.

In the third layered body A preparing step (S220), a third layered body A 10d that further includes the first electrode layer divisional layer A 12b is obtained by transferring the first electrode layer divisional layer A transfer material provided with the first electrode layer divisional layer A 12b onto the surface of the solid electrolyte layer 13 of the second layered body 10b, and applying a linear pressure P3 in the first axial direction.

In the third layered body B preparing step (S225), a third layered body B 10e that further includes the first electrode layer divisional layer B 12a is obtained by transferring the first electrode layer divisional layer B transfer material provided with the first electrode layer divisional layer B 12a onto the surface of the first electrode layer divisional layer A 12b of the third layered body A 10d, and applying a linear pressure P4 in the first axial direction.

In the first collector placing step (S230), the first collector 11 is placed on the surface of the first electrode layer divisional layer B 12a of the third layered body B 10e, and the solid-state battery 10 that includes the battery layer structure is obtained.

The method of manufacturing a solid-state battery may further include other steps. Examples of other steps are a step of applying restraining pressure to the battery layer structure by a restraining member, and a step of sealing the battery layer structure that has the restraining member in an exterior body.

<Types and Applications of Battery>

Although the type of the solid-state battery is not particularly limited, the solid-state battery is typically a lithium ion battery. Further, the solid-state battery that is an embodiment of the present disclosure may be a primary battery or may be a secondary battery, but thereamong, is preferably a secondary battery. This is because a secondary battery is useful as a battery that can be repeatedly charged/discharged, e.g., a battery installed in a vehicle. The solid-state battery may be a semi-solid-state battery or may be an all-solid-state battery. The solid-state battery is preferably an all-solid-state battery.

The applications of the solid-state battery that is an embodiment of the present disclosure are not particularly limited, and representative examples are application as the power source of a vehicle, electronic equipment, or a power storage system. The solid-state battery may be used as the power source for a moving body other than a vehicle (e.g., a train, ship or airplane), or may be used as the power source for an electric product such as an information processing device. Thereamong, the solid-state battery that is an embodiment of the present disclosure is preferably used as the power source of a vehicle, and is preferably the power source for driving of a hybrid electric vehicle, a plug-in hybrid electric vehicle, or a battery electric vehicle.

Examples of vehicles are electric four-wheel vehicles, electric two-wheel vehicles, gasolinepowered vehicles and diesel-powered vehicles. Examples of electric four-wheel vehicles are electric vehicles (BEVs), plug-in hybrid electric vehicles (PHEVs), and hybrid electric vehicles (HEVs). Examples of electric two-wheel vehicles are electric motorcycles and electric assist bicycles.

EXAMPLES

Embodiments of the present disclosure are described hereinafter with reference to Examples. However, the present disclosure is not limited to these Examples. Details of materials that are abbreviated are as follows.

SE: sulfide solid electrolyte expressed by compositional formula $Li_2S$-$P_2S_5$
NCA: positive electrode active material expressed by compositional formula

$$LiNi_{0.8}Co_{0.15}Al_{0.05}O_2$$

NBR: acrylonitrile-butadiene rubber
PVdF: polyvinylidene fluoride
VGCF: vapor grown carbon fibers
SUS: stainless steel

<Example 1>

(Preparation of Second Layered Body)

A solvent (butyl acetate) was mixed together with NCA (78.3 parts by mass) serving as a positive electrode active material, SE (18.8 parts by mass), VGCF (2.9 parts by mass) and PVdF (2.8 parts by mass), and a positive electrode slurry was prepared. This positive electrode slurry was coated on an aluminum foil and dried, and a positive electrode layer that was a first layered body was prepared.

Solvents (heptane and butyl acetate) were mixed together with SE (99.4 parts by mass) and NBR (0.6 parts by mass), and an SE slurry was prepared. This SE slurry was coated on an SUS foil and dried, and an electrolyte layer (SE layer) was formed.

The SUS foil on which the SE layer was formed was placed on the positive electrode layer formed on the aluminum foil, and a pressing treatment was carried out by roll pressing under the conditions of 0.50 t/cm (linear pressure P1) and 170°C. Thereafter, the SUS foil was peeled off from the SE layer, and the SE layer was transferred onto the positive electrode layer, and a second layered body was prepared. The linear pressure P1 and the temperature in the pressing treatment are listed in Table 1.

(Preparation of Third Layered Body)

A solvent (butyl acetate) was mixed together with silicon (49 parts by mass) serving as a negative electrode active material, SE (41.2 parts by mass), VGCF (7.5 parts by mass) and PVdF (6.6 parts by mass), and a negative electrode slurry was prepared. This negative electrode slurry was coated on an SUS foil and dried, and a negative electrode layer was formed.

The SUS foil on which the negative electrode layer was formed was placed on the surface of the SE layer of the second layered body in which the SE layer had been transferred onto the positive electrode layer, and a pressing treatment was carried out by roll pressing under the conditions of 1.0 t/cm (linear pressure P2) and 170°C. Thereafter, the SUS foil was peeled off from the negative electrode layer, and the negative electrode layer was transferred onto the SE layer, and a third layered body was prepared. The linear pressure P1 and the temperature in the pressing treatment are listed in Table 1.

(Formation of Battery Layer Structure)

An aluminum foil, on whose one surface a nickel plating layer was formed, was readied as the material of the negative electrode collector. The thickness of the aluminum foil was 15 $\mu$m. The negative electrode collector was placed on the surface of the negative electrode layer of the third layered body, and a battery layer structure was formed.

<Comparative Example 1>

A battery layer structure was formed in the same way as in Example 1, except that the conditions at the time of transferring the SE layer onto the positive electrode layer and preparing the second layered body were conditions of 0.25 t/cm (linear pressure P1) and 25°C, and the conditions at the time of transferring the negative electrode layer onto the SE layer and preparing the third layered body were conditions of 2.0 t/cm (linear pressure P2) and 170°C. Linear pressure P1 or linear pressure P2 and the respective temperatures in the pressing treatment are listed in Table 1.

<Example 2>

A battery layer structure was formed in the same way as in Example 1, except that the conditions at the time of transferring the SE layer onto the positive electrode layer and preparing the second layered body were conditions of 0.50 t/cm (linear pressure P1) and 170°C, and the conditions at the time of transferring the negative electrode layer onto the SE layer and preparing the third layered body were conditions of 2.5 t/cm (linear pressure P2) and 170°C. Linear pressure P1 or linear pressure P2 and the respective temperatures in the pressing treatment are listed in Table 1.

<Example 3>

(Preparation of Second Layered Body)

A second layered body was prepared in the same way as in Example 1.

(Preparation of Third Layered Body B)

A solvent (butyl acetate) was mixed together with silicon (49 parts by mass) serving as a negative electrode active material, SE (41.2 parts by mass), VGCF (7.5 parts by mass) and PVdF (6.6 parts by mass), and a negative electrode slurry was prepared. This negative electrode slurry was coated on SUS foils and dried, and negative electrode layer divisional layers were formed. Two negative electrode layer transfer materials were prepared: a negative electrode layer divisional layer A transfer material provided with the negative electrode layer divisional layer A, and a negative electrode layer divisional layer B transfer material provided with the negative electrode layer divisional layer B.

The SUS foil on which the negative electrode layer divisional layer A was formed was placed on the surface of the SE layer of the second layered body in which the SE layer had been transferred onto the positive electrode layer, and a pressing treatment was carried out by roll pressing under the conditions of 1.0 t/cm (linear pressure P3) and 170°C. Thereafter, the SUS foil was peeled off from the negative electrode layer divisional layer A, and the negative electrode layer divisional layer A was transferred onto the SE layer, and a third layered body A was prepared. Linear pressure P3 and the temperature in the pressing treatment are listed in Table 1.

The SUS foil on which the negative electrode layer divisional layer B was formed was placed on the surface of the negative electrode layer divisional layer A of the third layered body A in which the negative electrode layer divisional layer A had been transferred onto the SE layer, and a pressing treatment was carried out by roll pressing under the conditions of 2.0 t/cm (linear pressure P4) and 170°C. Thereafter, the SUS foil was peeled off from the negative electrode layer divisional layer B, and the negative electrode layer divisional layer B was transferred onto the negative electrode layer divisional layer A, and a third layered body B was prepared. Linear pressure P4 and the temperature in the pressing treatment are listed in Table 1.

(Formation of Battery Layer Structure)

An aluminum foil, on whose one surface a nickel plating layer was formed, was readied as the material of a negative electrode collector. The thickness of the aluminum foil was 15 μm. The negative electrode collector was placed on the surface of the negative electrode layer divisional layer B of the third layered body B, and a battery layer structure was formed.

<Example 4>

A battery layer structure was formed in the same way as in Example 2, except that the conditions at the time of placing the SUS foil, on which the negative electrode layer divisional layer A had been formed, on the surface of the SE layer of the second layered body, at which the SE layer had been transferred onto the positive electrode layer, and preparing the third layered body A were conditions of 0.50 t/cm (linear pressure P3) and 170°C, and the conditions at the time of transferring negative electrode layer divisional layer B onto negative electrode layer divisional layer A and preparing the third layered body were conditions of 1.0 t/cm (linear pressure P4) and 170°C. Linear pressure P3 or linear pressure P4 and the respective temperatures in the pressing treatment are listed in Table 1.

<Comparative Example 2>

A battery layer structure was formed in the same way as in Example 2, except that the conditions at the time of placing the SUS foil, on which negative electrode layer divisional layer A had been formed, on the surface of the SE layer of the second layered body, at which the SE layer had been transferred onto the positive electrode layer, and preparing the third layered body A were conditions of 0.25 t/cm (linear pressure P3) and 25°C, and the conditions at the time of transferring negative electrode layer divisional layer B onto negative electrode layer divisional layer A and preparing the third layered body were conditions of 2.0 t/cm (linear pressure P4) and 170°C. Linear pressure P3 or linear pressure P4 and the respective temperatures in the pressing treatment are listed in Table 1.

<Comparative Example 3>

A battery layer structure was formed in the same way as in Example 2, except that the conditions at the time of placing the SUS foil, on which negative electrode layer divisional layer A had been formed, on the surface of the SE layer of the second layered body, at which the SE layer had been transferred onto the positive electrode layer, and preparing the third layered body A were conditions of 0.50 t/cm (linear pressure P3) and 170°C, and the conditions at the time of transferring negative electrode layer divisional layer B onto negative electrode layer divisional layer A and preparing the third layered body were conditions of 3.0 t/cm (linear pressure P4) and 170°C. Linear pressure P3 or linear pressure P4 and the respective temperatures in the pressing treatment are listed in Table 1.

<Evaluation>

The battery layer structures obtained in the Examples and Comparative Examples were cut along the first axial direction which was the thickness direction of the battery layer structure, and were observed from SEM photographs. Note that the imaging conditions of the SEM photographs were 300× and 1500×, and the acceleration voltage was 2.0 kV. Voids at the interior of the negative electrode layer or voids between the negative electrode layer and the solid electrolyte layer were observed, and were evaluated as to whether or not they were voids matching respective conditions of shape, short axis and aspect ratio. Note that, hereinafter, "void" means a void at the interior of the negative electrode layer or a void between the negative electrode layer and the solid electrolyte layer.

The evaluation standards were as follows. The results of evaluation are shown in Table 1.

(Feasibility of Transfer)

A: The respective layers could be transferred.
B: There were layers that could not be transferred.

(Short Axis)

The lengths (short axes) in the first axial direction (battery layering direction) of the voids were measured in Example 1 through Example 4 and Comparative Example 3 in which the respective layers had been joined. The measured values are shown in Table 1. In cases in which plural voids were seen, the average value of the lengths is shown in Table 1. In Comparative Example 3, voids were not formed, and therefore, 0 is listed in the corresponding cell of Table 1.

(Aspect Ratio)

The lengths (short axes) in the first axial direction (battery layering direction) and the lengths of the long axes of the voids were measured in Example 1 through Example 4 and Comparative Example 3 in which the respective layers had been joined, and the aspect ratios were calculated from the measured values. The calculated values are shown in Table 1. In cases in which plural voids were seen, the average value of the lengths is used.

(Proportion (%) of Total Surface Area of Voids)

In the respective battery layer structures obtained in the Examples and Comparative Examples, there were cases in which voids that were long in the in-plane direction of the negative electrode layer were formed at at least one of the interior of the negative electrode layer and between the negative electrode layer and the solid electrolyte layer, and the proportion of the total surface area of the voids was measured. The proportion of the total surface area occupied by the voids, of the entire surface area of the first electrode layer, in a cross-sectional view along the first axial direction of the battery layer structure was measured. The results of measurement are shown in Table 1.

(Resistance Increase Rate)

The battery layer structures obtained by the Examples and Comparative Examples, and lithium foils serving as positive electrode collectors, were respectively shaped so as to form circles of diameters of 11.28 mm.
SE (100 mg) was pressed at 100 MPa by using a tool having a hole of a diameter of 10 mm, and an SE pellet of a diameter of 10 mm was fabricated.
A negative electrode collector, the SE pellet and the positive electrode collector were placed in this order in a cylindrical container of a diameter of 11.28 mm, and the structure was restrained by a restraining tool such that a pressure of 2 MPa was applied thereto, and a half-cell was fabricated. The half-cell was used as a battery for evaluation.
A cycling test, in which five cycles of charging/discharging were carried out under the conditions of 1 C and 1.5 - 4.1 V, was carried out on the batteries for evaluation that were the half-cells using the battery stacks fabricated in the Examples and Comparative Examples. DC-IR measurement (Direct Current Internal Resistance measurement) was carried out on the batteries for evaluation after the cycling test, and the resistance increase rate at discharging for 10 seconds was measured. The measured resistance increase rate is shown in Table 1. Resistance increase rates of 35% or less were considered acceptable.

[Table 1]

| | linear pressure | | | | | | | | evaluation | | | | |
|---|---|---|---|---|---|---|---|---|---|---|---|---|---|
| | P1 | | P2 | | P3 | | P4 | | feasibility of transfer | short axis ($\mu$m) | aspect ratio | proportion (%) of total surface area of voids | resistance increase rate 10 seconds after five cycle |
| | t/cm | °C | t/cm | °C | t/cm | °C | t/cm | °C | | | | | |
| Example 1 | 0.50 | 170 | 1.0 | 170 | - | - | - | - | A | 0.3 | 15 | 3 | 15 |
| Comparative Example 1 | 0.25 | 25 | 2.0 | 170 | - | - | - | - | B | - | - | - | - |
| Example 2 | 0.50 | 170 | 2.5 | 170 | - | - | - | - | A | 0.4 | 15 | 4 | 35 |
| Example 3 | - | - | - | - | 1.0 | 170 | 2.0 | 170 | A | 0.4 | 20 | 2 | 18 |
| Example 4 | - | - | - | - | 0.50 | 170 | 1.0 | 170 | A | 0.2 | 15 | 3 | 16 |
| Comparative Example 2 | - | - | - | - | 0.25 | 25 | 2.0 | 170 | B | - | - | - | - |
| Comparative Example 3 | - | - | - | - | 0.50 | 170 | 4.0 | 170 | A | 0 | 0 | 0 | 43 |

EP 4 769 497 A1

As shown in Table 1, it was confirmed that, in the solid-state batteries in accordance with the embodiments of the present disclosure, voids whose shapes in a cross-sectional view along the first axial direction were long in the in-plane direction of the first electrode layer were formed at at least one of the interior of the first electrode layer and the periphery of the first electrode layer. Further, it was confirmed that, in the solid-state batteries in accordance with the embodiments of the present disclosure, the resistance increase rate after a cycle test was suppressed due to the formation of voids whose shapes in a cross-sectional view along the first axial direction were long in the in-plane direction of the first electrode layer.

**Claims**

1. A solid-state battery, comprising:
   a structure in which a first collector, a first electrode layer, a solid electrolyte layer, a second electrode layer and a second collector are disposed in this order in a first axial direction; and

   a void at at least one of an interior of the first electrode layer or a periphery of the first electrode layer,
   wherein a shape of the void, as seen in a cross-sectional view along the first axial direction, is elongate in an in-plane direction of the first electrode layer.

2. The solid-state battery of claim 1, wherein a length of a short axis of the shape of the void, as seen in the cross-sectional view along the first axial direction, is 1 $\mu$m or less.

3. The solid-state battery of claim 1, wherein an aspect ratio of the shape of the void, as seen in the cross-sectional view along the first axial direction, is from 10 to 40.

4. The solid-state battery of claim 1, wherein the void is formed at at least one of the interior of the first electrode layer or between the first electrode layer and the solid electrolyte layer.

5. The solid-state battery of claim 1, wherein, as seen in the cross-sectional view along the first axial direction, one or more of the voids are formed, and the one or more voids occupy a surface area of from 1% to 10% of an entire surface area of the first electrode layer.

6. The solid-state battery of claim 1, wherein:

   the first electrode layer includes a plurality of divisional layers, and
   the solid-state battery comprises a void at at least one of the periphery of the first electrode layer or between the plurality of divisional layers.

7. A method of manufacturing a solid-state battery that includes a structure in which a first collector, a first electrode layer, a solid electrolyte layer, a second electrode layer and a second collector are disposed in this order in a first axial direction, the method comprising:

   a step of obtaining a second layered body that includes the second electrode layer and the solid electrolyte layer by transferring a solid electrolyte layer transfer material provided with the solid electrolyte layer onto a surface of the second electrode layer of a first layered body that has the second collector and the second electrode layer and applying a linear pressure P1 in the first axial direction;
   a step of obtaining a third layered body that further includes the first electrode layer by transferring a first electrode layer transfer material provided with the first electrode layer onto a surface of the solid electrolyte layer of the second layered body and applying a linear pressure P2 in the first axial direction; and
   a step of placing the first collector on a surface of the first electrode layer of the third layered body, wherein:

   the linear pressure P1 is greater than 0.25 t/cm,
   the linear pressure P2 is less than 4.0 t/cm, and
   the linear pressure P1 is less than the linear pressure P2.

8. A method of manufacturing a solid-state battery that includes a structure in which a first collector, a first electrode layer divisional layer B, a first electrode layer divisional layer A, a solid electrolyte layer, a second electrode layer and a second collector are disposed in this order in a first axial direction, the method comprising:

a step of obtaining a second layered body that includes the second electrode layer and the solid electrolyte layer by transferring a solid electrolyte layer transfer material provided with the solid electrolyte layer onto a surface of the second electrode layer of a first layered body that has the second collector and the second electrode layer;

a step of obtaining a third layered body A that further includes the first electrode layer divisional layer A by transferring a first electrode layer divisional layer A transfer material provided with the first electrode layer divisional layer A onto a surface of the solid electrolyte layer of the second layered body and applying a linear pressure P3 in the first axial direction;

a step of obtaining a third layered body B that further includes the first electrode layer divisional layer B by transferring a first electrode layer divisional layer B transfer material provided with the first electrode layer divisional layer B onto a surface of the first electrode layer divisional layer A of the third layered body A and applying a linear pressure P4 in the first axial direction; and

a step of placing the first collector on a surface of the first electrode layer divisional layer B of the third layered body B, wherein:

the linear pressure P3 is greater than 0.25 t/cm,
the linear pressure P4 is less than 3.0 t/cm, and
the linear pressure P3 is less than the linear pressure P4.

FIG. 1

FIG. 2

10

A                    A

Y
Z

FIG. 3

FIG. 4

FIG. 5

# FIG. 6

10a

14
15

S100

10b

P1

13
14
15

S110

10c

P2

12
13
14
15

16

S120

10

11
12
13
14
15

16

S130

X

Y

# FIG. 7

10a

14
15

S200

10b

13
14
15

S210

10d

P3

12b
13
14
15

16

S220

10e

P4

12a
12b
13
14
15

16

S225

10

11
12a
12b
13
14
15

16

S230

X

Y

## EUROPEAN SEARCH REPORT

**Application Number**

EP 25 22 6668

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 451 368 A2 (TOYOTA MOTOR CO LTD [JP]) 23 October 2024 (2024-10-23) * paragraphs [0034], [0035], [0039], [0040], [0049] - [0075] * ----- | 1-8 | INV. H01M4/04 H01M10/04 H01M10/0562 H01M10/0585 |
| X | EP 4 462 501 A2 (TOYOTA MOTOR CO LTD [JP]) 13 November 2024 (2024-11-13) * paragraphs [0061] - [0081] * ----- | 1-8 | |

TECHNICAL FIELDS
SEARCHED      (IPC)

H01M

The present search report has been drawn up for all claims

| Place of search | Date of completion of the search | Examiner |
|---|---|---|
| Munich | 21 April 2026 | Möller, Claudia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 6668

This annex lists the patent family members relating to the patent documents cited in  the above-mentioned European search report.
The members are as contained in the European Patent Office EDP file on
The European Patent Office is in no way liable for these particulars which are merely given for the purpose of information.

21-04-2026

| Patent document cited in search report | | Publication date | Patent family member(s) | | Publication date |
|---|---|---|---|---|---|
| EP  4451368 | A2 | 23-10-2024 | CN | 118825197 A | 22-10-2024 |
| | | | EP | 4451368 A2 | 23-10-2024 |
| | | | JP | 7754130 B2 | 15-10-2025 |
| | | | JP | 2024155039 A | 31-10-2024 |
| | | | US | 2024356016 A1 | 24-10-2024 |
| EP  4462501 | A2 | 13-11-2024 | CN | 118825274 A | 22-10-2024 |
| | | | EP | 4462501 A2 | 13-11-2024 |
| | | | JP | 7747018 B2 | 01-10-2025 |
| | | | JP | 2024154701 A | 31-10-2024 |
| | | | JP | 2025170427 A | 18-11-2025 |
| | | | KR | 20240155104 A | 28-10-2024 |
| | | | US | 2024356005 A1 | 24-10-2024 |

EPO FORM P0459

For more details about this annex : see Official Journal of the European Patent Office, No. 12/82

**EP 4 769 497 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019121532 A